# EUROPEAN PATENT SPECIFICATION

(11) **EP 3 442 718 B1**
(45) Date of publication and mention of the grant of the patent: **07.08.2019**
(21) Application number: 17718465.2
(22) Date of filing: 11.04.2017
(51) Int. Cl.: B05C 17/01, B05C 17/005, A61C 5/64

(54) **A SYRINGE FOR DISPENSING A DENTAL SUBSTANCE**
SPRITZE ZUR AUSGABE EINER DENTALSUBSTANZ
SERINGUE POUR DISTRIBUTION DE MATÉRIAU DENTAIRE

(30) Priority: 13.04.2016 EP 16165039
(43) Date of publication of application: 20.02.2019
(73) Proprietor: 3M Innovative Properties Company, St. Paul, MN 55133-3427 (US)
(72) Inventor: BOEHM, Andreas J., 82229 Seefeld (DE); PEUKER, Marc, 82229 Seefeld (DE)
(74) Representative: Hohmann, Arno
(86) International application number: PCT/US2017/026888
(87) International publication number: WO 2017/180545

(56) References cited:
- WO-A1-95/22941
- DE-U1-202010 013 127
- FR-A1- 2 855 504
- JP-A- 2005 212 842
- JP-A- 2014 166 259
- US-A- 3 378 176
- US-A1- 2009 317 167

## Description

### Field of the Invention

The invention relates to a syringe for dispensing a dental substance, and in particular to a syringe which can be operated in a stepwise manner.

### Background Art

Dental materials are often stored in packages from which they can be directly dispensed to a desired location. For example the dental materials may be dispensed from the package on a pad or into a well and may be applied from there within a patient's mouth. In other situations the dental materials may be placed into a patient's mouth directly from such a package.

Dental materials further are often prepared from two or more components that are mixed together just before use. Often the individual components are obtained as portions from larger packages, for example from tubes, bags or cartridges. There are packages on the market that allow manual or automatic dispensing of two or more components at desired amounts and at an appropriate ratio for mixing. Furthermore there are packages that allow dispensation of portions of readily mixed materials from individually stored components.

Often double-barrel syringes are used for storing and mixing two-component dental materials. Such double-barrel syringes typically have two side by side tubular barrels from which the components of the dental material can be extruded by pushing pistons into the respective barrel. In one configuration of such a double-barrel syringe has D-shaped barrels which, arranged side by side, overall form one cylindrical structure as disclosed for example in U.S. Design Patent no. 362,722.

Further, WO 2010/093575 discloses a syringe for dispensing a multi-component material. The syringe comprises a syringe cartridge having compartments for components of the multi-component material and a static mixer connected to the cartridge. The syringe further has a plunger assembly that is movable into the syringe cartridge to dispense material from the syringe.

There are further syringes that have a mechanism for alternative operation. Some syringes have a mechanism which operates based on a stepwise dispensation of the material. For example WO 2014/086559 A1 discloses a discharging device for a flowable component. The discharging device has a storage container with a storage chamber for accommodating the component, a filling opening and a discharging opening. The discharging device has a plunger which is arranged within the storage container and which is displaceable in an extension direction. Furthermore, the discharging device has an actuating element by means of which the plunger can be moved in a stepwise manner in the direction of the discharging opening. Further syringes having a stepwise operating mechanism are disclosed in US 3,378,176 and FR 2 855 504.

US 2009/0317167 A1 discloses a delivery system for dispensing small quantities of two components comprising a container and a plunger having two plunger rods, and an actuator.

Although there are a variety of syringes for dental use there is still a need for a syringe that is reliable and flexible in use, and nevertheless is relatively inexpensive. Such a syringe is desirably easy and convenient to use.

### Summary of the Invention

The invention relates to a syringe for dispensing a dental substance according to claim 1. The syringe comprises a container that forms at least a first and a second component chamber. Each, the first and the second chamber extend in a dimension parallel to a longitudinal axis of the syringe. The syringe further comprises a plunger that comprises a first and a second plunger rod. The first and second plunger rod are at least partially arranged in the first and second chambers, respectively, for a movement from a full position to an empty position over a displacement length. The syringe has an actuator that is guided or restricted for a movement along the longitudinal axis relative to the container. The movement of the actuator is further restricted for a predetermined actuation stroke being defined by a length between a rear position and a front position of the actuator. The plunger further has a toothing along the dimension of the longitudinal axis. The teeth of the toothing are spaced at a pitch. The actuator comprises at least a first pawl that meshes into (or is adapted to engage) the toothing of the plunger. The first pawl and the teeth of the toothing are configured such that in a movement of the actuator in a direction from the front toward the rear position the pawl overrides the teeth and in a movement in the opposite direction the pawl engages the teeth. The displacement length is greater than the actuation stroke and the actuation stroke is at least twice of the pitch.

The invention is advantageous is that it provides a syringe that is convenient to use and that at the same time can be used for dispensing different predetermined amounts of material. In particular the invention is advantageous in that it allows for changing between the predetermined amounts of material by the same operation as the operation for dispensation. In particular the invention allows a user for dispensing the material by moving an actuator and by controlling the movement of the actuator the predetermined amount of material can be selected. Further the invention is advantageous in that it provides for a syringes that is relatively inexpensive.

The first and the second chamber preferably extend at a generally uniform cross-section in the dimension parallel to a longitudinal axis of the syringe. Preferably, the first and the second chamber are arranged side by side. The first and the second chamber may particularly extend at a D-profile. The D-profiles may be based on a container portion forming a generally cylindrical outer wall which inwardly is separated into the first and second chamber by a generally planar partition wall.

The first and second plunger rod are fixedly connected to each other. Therefore, the plunger may have a connecting portion connecting the first and second plunger rod.

In an embodiment the plunger has a front portion formed adjacent a free end of the first and second plunger rod and an opposite rear portion. The first and second plunger rod are at least partially received within the first and second chamber, respectively, and wherein the rear portion of the plunger is arranged within the actuator. In particular, the free ends of each of the first and second plunger rod are preferably arranged within the first and second chamber, respectively. The connection portion preferably forms at last part of the plunger rear portion and may form a rear end of the plunger. Further, the free ends of the first and second plunger rod may form a front end of the plunger.

According to the invention, the actuator guides the plunger in a movement along the longitudinal axis. The actuator may form a circumferential wall portion within which the rear portion of the plunger is received. The circumferential wall portion of the actuator preferably extends along the longitudinal axis and thus may guide or restrict the plunger. In particular, the actuator and the plunger are preferably joined for a telescopic movement relative to each other.

In an embodiment the plunger has an overall plunger length which is greater than the displacement length. Accordingly, in the empty position the plunger sticks out from a rear end of the container.

In a further embodiment each of the first and second plunger rod comprises a pair of toothings. The longitudinal axis preferably defines a first dimension of a Cartesian coordinate system. The first and second plunger rod are preferably arranged side by side with respect to the second dimension of the coordinate system. Further, the pair of toothings face in opposite directions of the third dimension of the coordinate system. The arrangement side by side with respect to the second dimension means that the first and second plunger rod extend generally parallel to each other and side by side or laterally of the longitudinal axis. Further, the first and second plunger rod preferably extend at a generally uniform cross-section, for example at a D-profile matching with the profile of the first and second chamber, respectively.

In a further embodiment the container has a front end which opens the first and second chamber, and an opposite rear end forming a finger plate. The front end of the container may form a front wall which forms a front end of the first and second chamber. In the empty position the front end of the plunger preferably is located at the front end of the first and second chamber. For example the plunger may abut the container front wall in the empty position. It is noted that the plunger is understood to abut the container front wall also if a non-displaceable thin film of dental material is still present between the plunger and the front wall. Such a thin film may have a thickness of less than 0.1 mm. Further, in the full position the front end of the plunger is preferably spaced from the front end of the first and the second chamber. Preferably, in the full position the plunger front end is arranged closer to the container rear end than to the container front end. More preferably, in the full position the plunger front end is arranged at less than 20% of a length of the container, and most preferably at less than 20% of a total length of the first and second chamber.

In an embodiment the syringe further has a guiding sleeve that is arranged at the rear end of the container. The guiding sleeve preferably guides the actuator, in particular for a movement in the longitudinal axis. The actuator is preferably partially received within the guiding sleeve. In particular, the actuator preferably sticks out from a rear end of the guiding sleeve. The rear end of the guiding sleeve is opposite of a front end of the guiding sleeve that is arranged at the container rear end.

In a further embodiment the actuator has a front end which is received within the sleeve and an opposite rear end. The actuator rear end forms a thrust plate which extends radially to the longitudinal axis at a dimension or diameter that is greater that the radial dimension or diameter of the sleeve. One of the actuator and the sleeve may have a latch and the other one of the actuator and the sleeve may have a stop. The latch may engage the stop in the rear position of the actuator and preventing a further movement of the actuator from the front position in a direction beyond the rear position. The stop may be formed by a wall of a recess (for example an elongated hole) formed in the guiding sleeve or the actuator, respectively. Thus, the actuator is restricted for the predetermined actuation stroke. The skilled person will recognize other solutions for permitting a movement of the actuator and the guiding sleeve along the longitudinal axis only over a predetermined length.

In a further embodiment the thrust plate and the finger plate are spaced at a first operation distance of between about 80 mm and about 60 mm in the rear position of the actuator and a second operation distance of between about 75 mm and about 55 mm in the front position of the actuator. It has been found that these operation distances allow for convenient operation of the syringe at maximized operation force. For the purpose of the present specification the operation distance is measured between the rear end of the actuator (free end of the thrust plate) and a surface of the finger plate oriented toward the front end of the syringe.

In a further embodiment the sleeve has a see-through area which permits at least the rear end of the plunger to be seen from outside the sleeve. Such a see-through area may be provided by a transparent or translucent material the guiding sleeve is made of, or a window or hole through the guiding sleeve. Therefore, a user may be indicated the remaining material still contained within the syringe.

In one embodiment the syringe further comprising a spring which is arranged for urging the actuator toward the rear position. The spring may particularly be arranged for acting between the guiding sleeve and the actuator, or for acting between the container and the actuator. The spring is preferably a compressing spring which by spring force urges the actuator toward the rear position. The spring may be a spiral spring, for example made of metal or a plastic material.

In a further embodiment the syringe further comprises a dispensing nozzle. The dispensing nozzle is preferably received on the container. Further, the dispensing nozzle and the container in combination may form a valve for opening and closing the first and second chamber. The dispensing nozzle preferably has a dispensing cannula which forms on outlet for the dental material. Preferably, the dispensing nozzle has an inlet for the two components, and the inlet is connected to the cannula. Thus, the dispensing nozzle provides for receiving the two components at the inlet, merging the components in the cannula and releasing the components from the outlet. The dispensing nozzle may further comprise a static mixer arranged at least partially within the cannula for mixing the two components as they flow through the dispensing nozzle.

### Brief Description of the Figures

- Fig. 1: is a perspective view of a syringe according to an embodiment of the invention;
- Fig. 2: is a perspective view of the syringe shown in Fig. 1 at a different stage of operation;
- Fig. 3: is a cross-sectional view of a syringe according to an embodiment of the invention;
- Fig. 4: illustrates the syringe of the invention at different stages of operation;
- Fig. 5: is a cross-sectional view of a portion of the syringe according to an embodiment of the invention;
- Fig. 6: is a cross-sectional view of a further portion of the syringe according to an embodiment of the invention; and
- Fig. 7: is a diagram of the hand force dependent on the hand opening.

### Detailed Description of the Invention

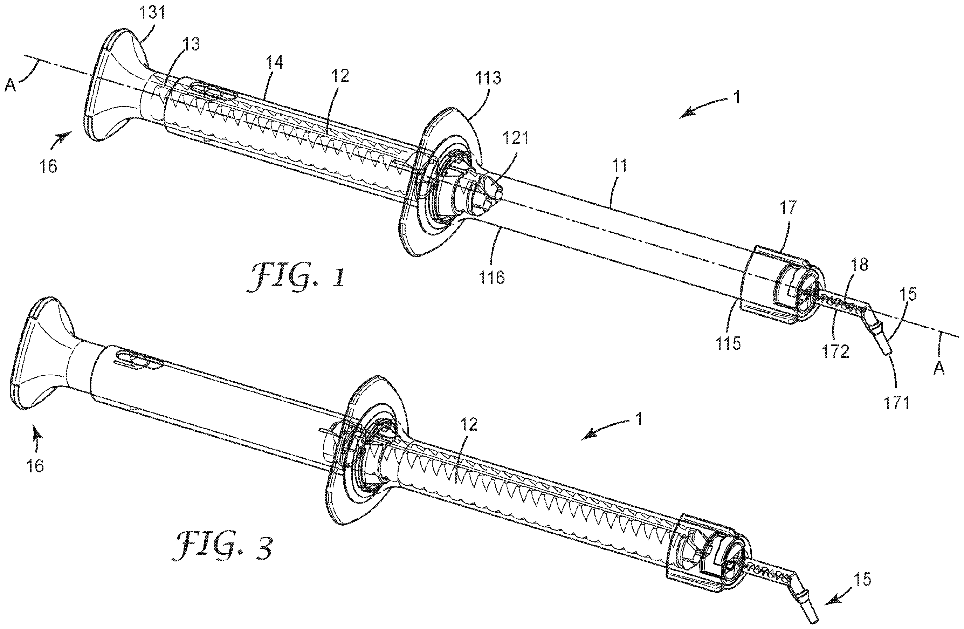

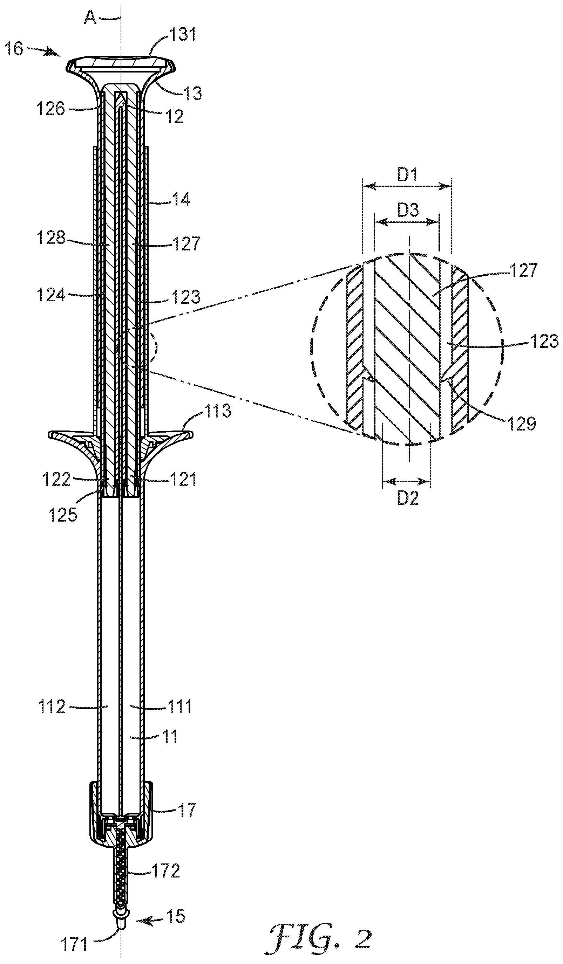

Figures 1 and 2 show a syringe 1 according to an embodiment of the invention. The syringe 1 extends along a longitudinal axis A and has a container 11 which forms (as indicated in Fig. 2) a first chamber 111 and a second chamber 112. The first and second chamber 111, 112 contain a dental material in the form of two components each stored in one of the first and second chamber 111, 112, respectively. Further, the syringe 1 has a plunger 12 which comprises a first plunger rod 121 and a second plunger rod 122 (see Fig. 2). The plunger 12 is partly accommodated within the actuator 13.

The syringe 1 further has an actuator 13 for stepwise moving the plunger 12 toward a front end 15 of the syringe 1. The actuator 13 is slidably accommodated within a guiding sleeve 14 which further guides the actuator 13 in a movement along the longitudinal axis A.

The syringe 1 further has a finger plate 113 and a thrust plate 131. The thrust plate 131 in the example forms a rear end 16 of the syringe 1. The finger plate 113 forms a rear end 116 of the container 11. The finger plate 113 and the thrust plate 131 enable a manual operation of the syringe 1 by a user for dispensing portions of the dental material from the syringe 1.

The syringe 1 further has a nozzle 17 which is received on a front end 115 of the container 11. In particular the nozzle is rotatably attached on the container front end 115. The container 11 and the nozzle 17 in combination form a rotary slide valve for sealing the first and second chamber 111, 112 in a first position of the rotary slide valve and for establishing fluid communication between an outlet 171 of the nozzle 17 in a second position of the rotary slide valve. The first and second position of the rotary slide valve refer to two different angular positions of the nozzle 17 and the container 11 relative to each other about the longitudinal axis A. The nozzle 17 further comprises a cannula 172 in which in the example a static mixer 18 is accommodated. Thus, the two components are mixed as they are urged through the nozzle 17 so that the dental material exits the outlet 171 as a mixture from the two components.

Figures 1 and 2 illustrate the syringe 1 in a full position. In the full position the first and second chamber 111, 112 contains an amount of material which is sufficient for several dispensation strokes as further described in detail below. The full position may correspond to a situation in which the syringe 1 is still unused after delivery from the manufacturer of the syringe.

In the example the plunger 12 has a first and a second through-hole 123, 124 which each are sealed by a first and a second pin 127, 128, respectively. The first and second through-hole 123, 124 serve for placing the plunger 12 into the container 11 at a stage at which the first and second chamber 111, 112 are already filled with the two components. Such a stage typically exists during manufacturing and filling of the syringe 1, for example at the manufacturer. During placing the plunger 12 into the container 11 the first and second pin 127, 128 do not seal the first and second through-hole 123, 124. In particular, the first and second pin 127, 128 may be removed from the first and second through-hole 123, 124. Thus, the plunger 12 can be placed into the container 11 while air displaced by the plunger 12 from the container 11 can escape through the first and second through-holes 123, 124. Each through-hole 123,124 has a generally uniform major diameter D1 over its length and comprises each a constriction forming a smaller diameter D2. Each constriction D2 is formed by a deformable sealing lip 129. The deformable sealing lips are arranged adjacent a front end 125 of the plunger 12. For sealing the container 11 after the plunger 12 has been set to the desired position, the first and second pin 127, 128 can be pushed into first and a second through-hole 123, 124. Thereby, the sealing lips are elastically deformed by the respective pin 127, 128 so that the pins 127, 128 seal the through-holes 123, 124 of the plunger 12. The first and second pin 127, 128 each have a diameter D3. The diameter D3 is greater than the diameter D2. Therefore, the pins 127, 128 deform the respective sealing lip when pushed through, thus forming a tight seal with the sealing lip. Further, the diameter D1 of each of the through-holes 123, 124 is greater than the diameter D3 of each of the pins 127, 128. Therefore, a gap is formed between each of the first and second pin 127, 128 and the through-holes 123, 124. The plunger 12 is typically positioned in the container 11 such that each of the two components contained in the first and second chamber 111, 112 is displaced into the respective through-hole 123, 124 to a position between the constriction and a rear end 126 of the plunger. Thus, the first and second chamber 111, 112 is sealed substantially free of air. Further, any excess amount of a component from filling tolerances in the first or second chamber 111, 112 is stored in the gap formed between the through-holes 123, 124 and the pins 127, 128 behind the constriction with respect to the front end 125 of the plunger 12.

In contrast Fig. 3 shows the same syringe 1 as shown in Figures 1 and 2 but with the dental material extruded from the syringe 1. At the stage shown the plunger 12 is in the empty position. The empty position is an extreme position of the plunger from which a further movement in a direction from the rear end 16 toward the front end 15 is disabled.

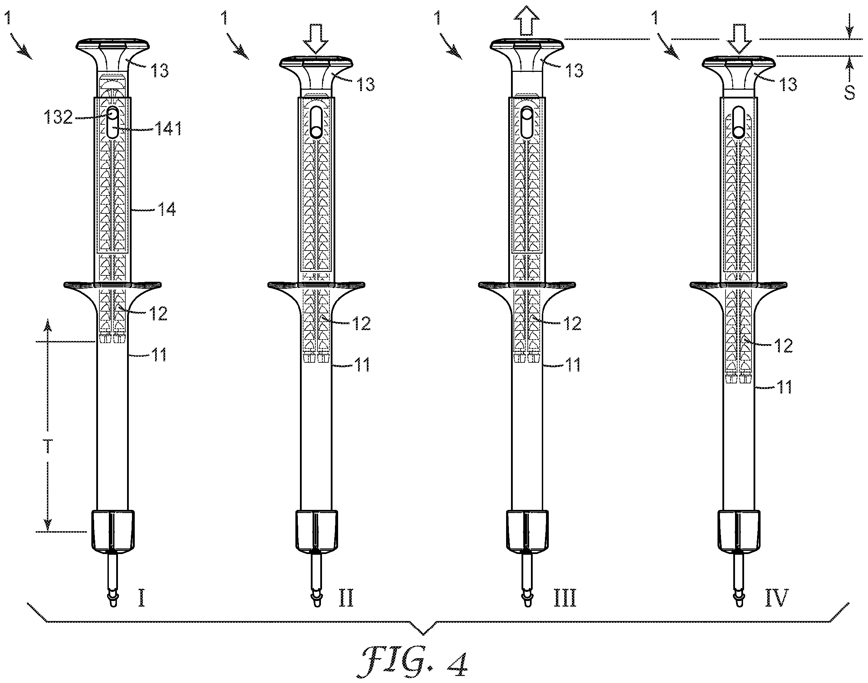

The operation of the syringe 1 is illustrated in Fig. 4 at different stages of operation I, II, III and IV. Stage I illustrates an initial stage in which the actuator is released. In the initial stage the actuator 13 is in a rear position with respect to the container 11. Stage II illustrates an actuated stage in which the actuator 13 is positioned in a front position with respect to the container 11. The actuator 13 is restricted for a movement between the rear and the front position as extreme positions.

In the example the restriction of the movement of the actuator 13 is provided by an elongated through-hole 141 and a latch 132 that is protruding into the elongated through-hole 141. The latch 132 is movable along the through-hole 141 and restricted by the through-hole 141 for a movement over only the length of the actuation stroke.

The actuated stage is typically reached in that a user pushes the actuator 13 relative to the container 11. Thereby, a pre-determined amount of dental material is dispensed. This is because the movement of the actuator 13 is restricted between the rear and the front position and because the actuator 13 is engaged with the piston 12 during the movement from the rear toward the front position. The engagement is such that a movement of the actuator 13 causes a movement of the plunger 12 by the same distance. The movement between the rear and the front position (and vice versa) is referred to herein as actuation stroke. The movement from the rear to the front position is referred to herein as forward stroke, and the movement from the front to the rear position is referred to as return stroke. Stage III illustrates the initial stage again. At this stage the actuator is reset from the front position to the rear position. The resetting is typically reached after the user releases the actuator 13, for example caused by spring force. During the return stroke the actuator and the plunger 12 are disengaged so that they can move relative to each other. Accordingly, the plunger 12 (being retained in the container 11 by friction) substantially does not move during the return stroke while the actuator 13 moves from the front to the rear position. Stage IV illustrates a stage after a further forward stroke. The actuation stroke has a length S. Accordingly, each forward stroke causes the plunger 12 to move by the distance S. Because the plunger 12 is movable over a displacement length T which is greater than the length S of the actuation stroke, the plunger 12 is only stepwise movable over the displacement length T. Therefore, the syringe 1 of the invention provides for dispensation of multiple predetermined amounts of dental material.

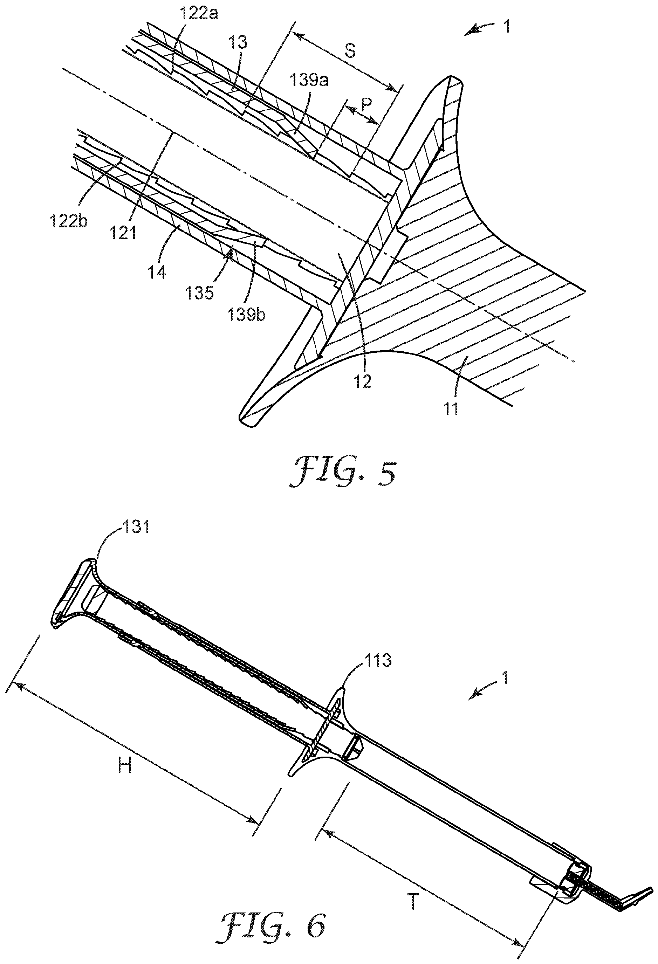

Figures 5 and 6 show detail views of the syringe 1. Fig. 5 shows a portion of the syringe 1 with the actuator 13, the guiding sleeve 14, the plunger 12 and the container 11. The plunger 12 has a first toothing 122a and a second toothing 122b. The first and second toothing 122a, 122b are facing in opposite directions. Further, first and second toothing 122a, 122b are arranged on the first plunger rod 121. The second plunger rod (hidden in this view) has a third and fourth toothing corresponding to the first and second toothing 122a, 122b. Accordingly, each plunger rod has a pair of toothings. The teeth of each of the first, second, third and fourth toothing are arranged at a pitch P.

In the following it is referred to the visible parts of the syringe, in particular the first plunger rod 122 with toothings 122a and 122b although the same teaching applied also for the second plunger rods with corresponding toothings.

The actuator 13 at a front end 135 forms a first and a second pawl 139a, 139b which mesh into the first and second toothings 122a, 122b, respectively. The toothings 122a, 122b have a saw-tooth profile in a plane parallel to the longitudinal axis A. The toothings 122a, 122b are configured so that in a forward stroke of the actuator 13 the pawls 139a, 139b engage a step flank (the steeper flank of a tooth in the saw-tooth profile) of the toothings. Further, in the reverse stroke of the actuator 13 the pawls 139a, 139b ride over one or more ramp flanks of the toothings. Accordingly, the actuator 13 entrains the plunger 12 in a forward stroke but moves relative to the plunger 12 in a return stroke.

The length S of the actuation stroke in the example is approximately three times of the pitch P. In other examples the length S of the actuation stroke is at least twice of the pitch P. Therefore, the syringe of the invention allows for dispensing multiple different pre-determined amounts of dental material. For example after a first full actuation stroke a user may stop the corresponding return stroke upon the pawls overriding a single tooth or two teeth only and start a new forward stroke from such a position. Overriding of a tooth of the toothing by the pawls typically causes an audible click upon the pawls snaps behind the step flank of the tooth. Therefore the user can recognize the position between the plunger and the actuator in a return stroke. In this way larger and smaller pre-determined amounts of dental material can be dispensed from the same syringe. For example, the user can dispense material by a full actuation stroke in which the actuator 13 is moved over the entire length between the rear position and the front position, or a partial actuation stroke in which the actuator 13 is moved only over the length of one or more pitches less than the length between the rear position and the front position. Each of the actuation strokes, either the full actuation strokes or the partial actuation strokes are referred to herein as dispensation strokes.

This is particularly useful in a dental treatment in which a base amount (full forward stroke) of material is typically required and in which smaller amounts (one or more partial forward strokes) need to be precisely added to complete the amount of material required for the individual clinical situation.

As indicated in Fig. 6 the displacement length T is a multiple of the length S of the actuation stroke and the length S of the actuation stroke is a multiple of the pitch P. In the example the ratio between T and S is 12 : 1 and the ratio between S and P is 3 : 1.

The syringe 1 is further configured such that the finger plate 113 and the thrust plate 131 are spaced at distance H in the rear position of the actuator 13. Further, the finger plate 113 and the thrust plate 131 are spaced at distance H - S (H minus S) in the front position of the actuator 13, whereby H - S is greater zero. Preferably, H - S is about between 80% and 90% of H. Further, H is about between 80 mm and 50 mm.

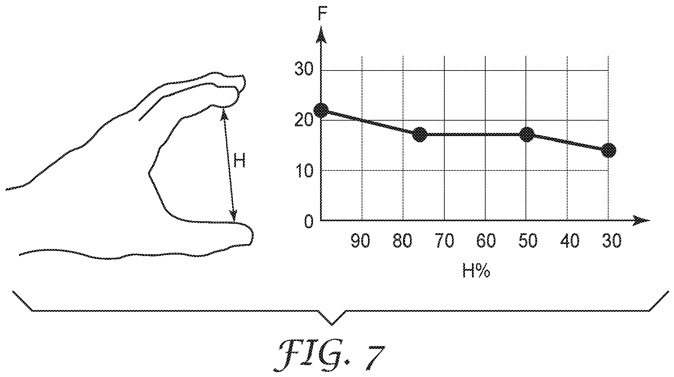

Fig. 7 shows on the left a full hand opening H which may correspond to the distance between the finger plate and the thrust plate of the syringe. As indicated in the diagram on the right a finger force F between the fingers and the thumb urged toward each other has a maximum at full hand opening and decreases toward smaller hand openings. Thus, the syringe being preferably adapted with the distance of the finger plate and the thrust plate to a typical hand opening can be operated relatively conveniently. Further, because the distance between the finger plate and the thrust plate is restricted between 100 % and 80% of the distance H the syringe of the invention can be conveniently used over the full range of the displacement length T.

## Claims

1. A syringe (1) for dispensing a dental substance, comprising a container (11) forming at least a first and a second component chamber that extend in a dimension parallel to a longitudinal axis of the syringe; a plunger (12) comprising a first and a second plunger rod (121) that are fixedly connected to each other;
the first and second plunger rod being at least partially arranged in the first and second chambers, respectively, for a movement from a full position to an empty position over a displacement length (T); an actuator (13) being guided for a movement along the longitudinal axis relative to the container, wherein the movement of the actuator is restricted for a predetermined actuation stroke being defined by a length (S) between a rear position and a front position of the actuator;
wherein the actuator guides the plunger in a movement along the longitudinal axis; wherein the plunger has a toothing (122a) along the dimension of the longitudinal axis, the teeth of the toothing (122a) being spaced at a pitch (P); the actuator comprising at least a first pawl (139a) that meshes into the toothing of the plunger, wherein the first pawl and the teeth of the toothing are configured such that in a movement of the actuator in a direction from the front toward the rear position the pawl overrides the teeth and in a movement in the opposite direction the pawl engages the teeth;
wherein the displacement length is greater than the actuation stroke and the actuation stroke is at least twice of the pitch.

2. The syringe of claim 1, wherein the plunger has a front portion formed adjacent a free end of the first and second plunger rod and an opposite rear portion, wherein the first and second plunger rod are at least partially received within the first and second chamber, respectively, and wherein the rear portion of the plunger is arranged within the actuator.

3. The syringe of claim 2, wherein the actuator guides the plunger in a movement along the longitudinal axis.

4. The syringe of any of the preceding claims, wherein the plunger has an overall plunger length which is greater than the displacement length.

5. The syringe of any of the preceding claims, wherein each of the first and second plunger rod comprises a pair of toothings.

6. The syringe of claim 5, wherein the longitudinal axis defines a first dimension of a Cartesian coordinate system, the first and second plunger rod being arranged side by side with respect to a second dimension of the coordinate system, and wherein the pair of toothings face in opposite directions of the third dimension.

7. The syringe of any of the preceding claims, wherein the container has a front end which opens the first and second chamber, and an opposite rear end forming a finger plate.

8. The syringe of claim 7, further having a guiding sleeve (14) being arranged at the container rear end and guiding the actuator that is partially received within the guiding sleeve.

9. The syringe of claim 8, wherein the actuator has a front end which is received within the guiding sleeve and an opposite rear end, the rear end forming a thrust plate which extends radially to the longitudinal axis at a dimension that is greater that the radial dimension of the guiding sleeve.

10. The syringe of claim 9, wherein one of the actuator and the guiding sleeve has a latch 2. (132) and the other one of the actuator and the guiding sleeve has a stop, wherein the latch engages the stop in the rear position of the actuator and preventing a further movement of the actuator from the front position in a direction beyond the rear position.

11. The syringe of claim 10, wherein the stop is formed by a wall of a recess formed in the guiding sleeve or the actuator, respectively.

12. The syringe of any of the claims 7 to 11, wherein the thrust plate (131) and the finger plate (113) are spaced at a first operation distance of between about 80 mm and about 60 mm in the rear position of the actuator and a second operation distance of between about 75 mm and about 55 mm in the front position of the actuator.

13. The syringe of any of the claims 7 to 12, wherein the sleeve has a see-through area permitting the rear end of the plunger to be seen from outside the sleeve.

14. The syringe of any of the preceding claims, further comprising a spring which is arranged for urging the actuator toward the rear position.

15. The syringe of any of the preceding claims, further comprising a dispensing nozzle (17) that is received on the container, the dispensing nozzle and the container in combination forming a valve for opening and closing the first and second chamber.

## Patentansprüche

1. Eine Spritze (1) zum Abgeben einer Dentalsubstanz, umfassend
einen Behälter (11), der mindestens eine erste und eine zweite Komponentenkammer ausbildet, die sich in einer Abmessung parallel zu einer Längsachse der Spritze erstrecken;
einen Kolben (12), umfassend eine erste und eine zweite Kolbenstange (121), die fest miteinander verbunden sind;
wobei die erste und die zweite Kolbenstange für eine Bewegung von einer vollen Position zu einer leeren Position über eine Verschiebungslänge (T) mindestens teilweise in jeweils der ersten und zweiten Kammer angeordnet sind;
wobei ein Aktuator (13) für eine Bewegung entlang der Längsachse relativ zum Behälter geführt wird, wobei die Bewegung des Aktuators für einen vorbestimmten Betätigungshub, der durch eine Länge (S) zwischen einer hinteren Position und einer vorderen
Position des Aktuators definiert ist, eingeschränkt ist;
wobei der Aktuator den Kolben bei einer Bewegung entlang der Längsachse führt;
wobei der Kolben entlang der Abmessung der Längsachse eine Verzahnung (122a) aufweist, wobei die Zähne der Verzahnung (122a) mit einem Abstand (P) beabstandet sind;
wobei der Aktuator mindestens eine erste Sperrklinke (139a) umfasst, die sich mit der Verzahnung des Kolbens verzahnt, wobei die erste Sperrklinke und die Zähne der Verzahnung so konfiguriert sind, dass bei einer Bewegung des Aktuators in eine Richtung von der vorderen hin zu der hinteren Position die Sperrklinke die Zähne überbrückt und bei einer Bewegung in der entgegengesetzte Richtung die Sperrklinke mit den Zähnen in Eingriff gelangt;
wobei die Verschiebungslänge größer als der Betätigungshub ist und der Betätigungshub mindestens das Doppelte des Abstands beträgt.

2. Die Spritze nach Anspruch 1, wobei der Kolben einen vorderen Abschnitt, der einem freien Ende der ersten und zweiten Kolbenstange benachbart ausgebildet ist, und einen gegenüberliegenden hinteren Abschnitt aufweist, wobei die erste und zweite Kolbenstange mindestens teilweise innerhalb der jeweils ersten und zweiten Kammer aufgenommen sind und wobei der hintere Abschnitt des Kolbens innerhalb des Aktuators angeordnet ist.

3. Die Spritze nach Anspruch 2, wobei der Aktuator den Kolben bei einer Bewegung entlang der Längsachse führt.

4. Die Spritze nach einem der vorstehenden Ansprüche, wobei der Kolben eine Gesamtkolbenlänge aufweist, die größer als die Verschiebungslänge ist.

5. Die Spritze nach einem der vorstehenden Ansprüche, wobei jede der ersten und der zweiten Kolbenstange ein Paar von Verzahnungen umfasst.

6. Die Spritze nach Anspruch 5, wobei die Längsachse eine erste Abmessung eines kartesischen Koordinatensystems definiert, die erste und zweite Kolbenstange bezüglich einer zweiten Abmessung des Koordinatensystems nebeneinander angeordnet sind, und wobei das Paar von Verzahnungen in entgegengesetzte Richtungen der dritten Abmessung weisen.

7. Die Spritze nach einem der vorstehenden Ansprüche, wobei der Behälter ein vorderes Ende, das die erste und zweite Kammer öffnet, und ein gegenüberliegendes hinteres Ende, das eine Fingerplatte ausbildet, aufweist.

8. Die Spritze nach Anspruch 7, ferner mit einer Führungshülse (14), die an dem hinteren Behälterende angeordnet ist und den Aktuator, der teilweise innerhalb der Führungshülse aufgenommen ist, führt.

9. Die Spritze nach Anspruch 8, wobei der Aktuator ein vorderes Ende, das innerhalb der Führungshülse aufgenommen ist, und ein gegenüberliegendes hinteres Ende aufweist, wobei das hintere Ende eine Druckplatte ausbildet, die sich in einer Abmessung radial zur Längsachse erstreckt, die größer ist als die radiale Abmessung der Führungshülse.

10. Die Spritze nach Anspruch 9, wobei eines von dem Aktuator und der Führungshülse eine Sperre (132) aufweist und das andere von dem Aktuator und der Führungshülse einen Anschlag aufweist, wobei die Sperre in der hinteren Position des Aktuators mit dem Anschlag in Eingriff gelangt und eine weitere Bewegung des Aktuators von der vorderen Position in eine Richtung über die hintere Position hinaus verhindert.

11. Die Spritze nach Anspruch 10, wobei der Anschlag durch eine Wand einer Ausnehmung ausgebildet ist, die jeweils in der Führungshülse oder dem Aktuator ausgebildet ist.

12. Die Spritze nach einem der Ansprüche 7 bis 11, wobei die Druckplatte (131) und die Fingerplatte (113) in der hinteren Position des Aktuators mit einer ersten Betriebsdistanz von zwischen etwa 80 mm und etwa 60 mm und in der vorderen Position des Aktuators mit einer zweiten Betriebsdistanz von zwischen etwa 75 mm und etwa 55 mm beabstandet sind.

13. Die Spritze nach einem der Ansprüche 7 bis 12, wobei die Hülse einen Durchsichtsbereich aufweist, durch den das hintere Ende des Kolbens von außerhalb der Hülse gesehen werden kann.

14. Die Spritze nach einem der vorstehenden Ansprüche, ferner eine Feder umfassend, die zum Drücken des Aktuators hin zur hinteren Position angeordnet ist.

15. Die Spritze nach einem der vorstehenden Ansprüche, ferner umfassend eine Abgabedüse (17), die auf dem Behälter aufgenommen ist, wobei die Abgabedüse und der Behälter in Kombination ein Ventil zum Öffnen und Schließen der ersten und zweiten Kammer ausbilden.

## Revendications

1. Seringue (1) pour distribuer une substance dentaire, comprenant
un récipient (11) formant au moins une première et une deuxième chambre de composant qui s'étendent dans une dimension parallèle à un axe longitudinal de la seringue ;
un piston (12) comprenant une première et une deuxième tige de piston (121) qui sont reliées l'une à l'autre de façon fixe ;
la première et la deuxième tige de piston étant au moins partiellement agencées dans respectivement les première et deuxième chambres pour un mouvement d'une position remplie à une position vide sur une longueur de déplacement (T) ;
un actionneur (13) étant guidé pour un mouvement le long de l'axe longitudinal par rapport au récipient, le mouvement de l'actionneur étant restreint sur une course d'actionnement prédéterminée étant définie par une longueur (S) entre une position arrière et une position avant de l'actionneur ;
dans laquelle l'actionneur guide le piston dans un mouvement le long de l'axe longitudinal ;
dans laquelle le piston a une denture (122a) le long de la dimension de l'axe longitudinal, les dents de la denture (122a) étant espacées selon un pas (P) ;
l'actionneur comprenant au moins un premier cliquet (139a) qui s'engrène dans la denture du piston, le premier cliquet et les dents de la denture étant configurés de telle sorte que, dans un mouvement de l'actionneur dans une direction allant de l'avant vers la position arrière, le cliquet dépasse les dents et, dans un mouvement dans le sens opposé, le cliquet vient en prise avec les dents ;
dans laquelle la longueur de déplacement est supérieure à la course d'actionnement et la course d'actionnement fait au moins deux fois le pas.

2. Seringue selon la revendication 1, dans laquelle le piston a une partie avant formée de manière adjacente à une extrémité libre de la première et de la deuxième tige de piston et une partie arrière opposée, la première et la deuxième tige de piston étant au moins partiellement reçues à l'intérieur respectivement de la première et de la deuxième chambre, et la partie arrière du piston étant agencée à l'intérieur de l'actionneur.

3. Seringue selon la revendication 2, dans laquelle l'actionneur guide le piston dans un mouvement le long de l'axe longitudinal.

4. Seringue selon l'une quelconque des revendications précédentes, dans laquelle le piston a une longueur globale de piston qui est supérieure à la longueur de déplacement.

5. Seringue selon l'une quelconque des revendications précédentes, dans laquelle chacune de la première et de la deuxième tige de piston comprend une paire de dentures.

6. Seringue selon la revendication 5, dans laquelle l'axe longitudinal définit une première dimension d'un système de coordonnées cartésiennes, la première et la deuxième tige de piston étant agencées côte à côte par rapport à une deuxième dimension du système de coordonnées, et la paire de dentures se faisant face dans des directions opposées de la troisième dimension.

7. Seringue selon l'une quelconque des revendications précédentes, dans laquelle le récipient a une extrémité avant qui ouvre la première et la deuxième chambre, et une extrémité arrière opposée formant une plaque à doigts.

8. Seringue selon la revendication 7, ayant en outre un manchon de guidage (14) étant agencé au niveau de l'extrémité arrière du récipient et guidant l'actionneur qui est partiellement reçu à l'intérieur du manchon de guidage.

9. Seringue selon la revendication 8, dans laquelle l'actionneur a une extrémité avant qui est reçue à l'intérieur du manchon de guidage et une extrémité arrière opposée, l'extrémité arrière formant une plaque de poussée qui s'étend radialement vers l'axe longitudinal à une dimension qui est supérieure à la dimension radiale du manchon de guidage.

10. Seringue selon la revendication 9, dans laquelle l'un parmi l'actionneur et le manchon de guidage a un verrou (132) et l'autre parmi l'actionneur et le manchon de guidage a une butée, le verrou venant en prise avec la butée dans la position arrière de l'actionneur et empêchant un mouvement supplémentaire de l'actionneur depuis la position avant dans une direction au-delà de la position arrière.

11. Seringue selon la revendication 10, dans laquelle la butée est formée par une paroi d'un évidement formé respectivement dans le manchon de guidage ou l'actionneur.

12. Seringue selon l'une quelconque des revendications 7 à 11, dans laquelle la plaque de poussée (131) et la plaque à doigts (113) sont espacées selon une première distance de fonctionnement comprise entre environ 80 mm et environ 60 mm dans la position arrière de l'actionneur et une deuxième distance de fonctionnement comprise entre environ 75 mm et environ 55 mm dans la position avant de l'actionneur.

13. Seringue selon l'une quelconque des revendications 7 à 12, dans laquelle le manchon a une zone transparente permettant de voir l'extrémité arrière du piston depuis l'extérieur du manchon.

14. Seringue selon l'une quelconque des revendications précédentes, comprenant en outre un ressort qui est agencé pour solliciter l'actionneur vers la position arrière.

15. Seringue selon l'une quelconque des revendications précédentes, comprenant en outre une buse de distribution (17) qui est reçue sur le récipient, la buse de distribution et le récipient en combinaison formant une soupape pour ouvrir et fermer la première et la deuxième chambre.
